# EUROPEAN PATENT SPECIFICATION

(11) **EP 1 100 319 B1**
(45) Date of publication and mention of the grant of the patent: **04.02.2004**
(21) Application number: 00929950.4
(22) Date of filing: 10.05.2000
(51) Int. Cl.: A01K 1/015

(54) **AN UNMANNED VEHICLE ADAPTED TO BE USED IN A STABLE**
UNBEMANNTES FAHRZEUG ZUR ANWENDUNG IN EINEM STALL
VEHICULE TELEGUIDE CON U POUR ETRE UTILISE DANS UNE ETABLE

(30) Priority: 25.05.1999 NL 1012140
(43) Date of publication of application: 23.05.2001
(73) Proprietor: Lely Enterprises AG, 6300 ZUG (CH)
(72) Inventor: VAN DEN BERG, Karel, NL-2971 BR Bleskensgraaf (NL)
(74) Representative: Corten, Maurice Jean F.M.
(86) International application number: PCT/NL2000/000311
(87) International publication number: WO 2000/070939

(56) References cited:
- WO-A-96/14735
- WO-A-97/31524
- FR-A- 2 704 779
- GB-A- 2 257 884
- DATABASE WPI Section EI, Week 9820 Derwent Publications Ltd., London, GB; Class T01, AN 1998-217811 XP002126987 & AU 36117 97 A (LEXTRON INC), 5 March 1998 (1998-03-05)

## Description

The invention relates to an unmanned vehicle, which is adapted to be used in a stable, such as a cowshed, according to the preamble of claim 1.

Such a vehicle is known from WO 96/14735.

It is an objective of the invention to provide a multifunctional, unmanned vehicle.

In accordance with the invention, this is achieved in that the unmanned vehicle of the sort as defined above comprises the features according to the characterising part of claim 1. As a result thereof the unmanned vehicle is capable of providing e.g. a cubicle in the stable with a layer of sawdust or straw or any other material which is suitable for covering the floor.

According to an inventive feature, the unmanned vehicle is provided with navigation means for guiding the unmanned vehicle through the stable. According to an aspect of the invention, the navigation means and/or detection means comprise a camera. However, it will be obvious that it is also possible for the navigation means to comprise, besides the camera, a radar or an ultrasonic sensor, for example.

According to an inventive feature, the spreading means comprise metering means for metering the material to be spread. With the aid of the metering means it is possible to spread a uniform layer of material over certain floor surface areas in the stable. According to an embodiment of the invention, the spreading means comprise a ventilator for spreading the material by blowing. It is further possible for the spreading means to comprise a compressed air unit, so that the material is spread by means of compressed air. For the purpose of spreading such material uniformly over a specific surface area, according to an inventive feature the spreading means comprise a distribution mouthpiece. By means of the distribution mouthpiece it is also achieved that the spread pattern of the material is exactly defined. For the purpose of using the spreading means in a more flexible manner, according to an inventive feature, the spreading means are rotatably disposed on the unmanned vehicle.

According to an inventive feature, the unmanned vehicle may also comprise a manure displacing device, such as e.g. a manure slide. By means of the manure displacing device it is possible first to clean the cubicle, after which the material to be spread is distributed over the cubicle floor.

The invention will now be explained in further detail with reference to the accompanying drawings.

Figure 1 is a side view of a first unmanned vehicle according to the invention, and

Figure 2 is a side view of a second unmanned vehicle according to the invention.

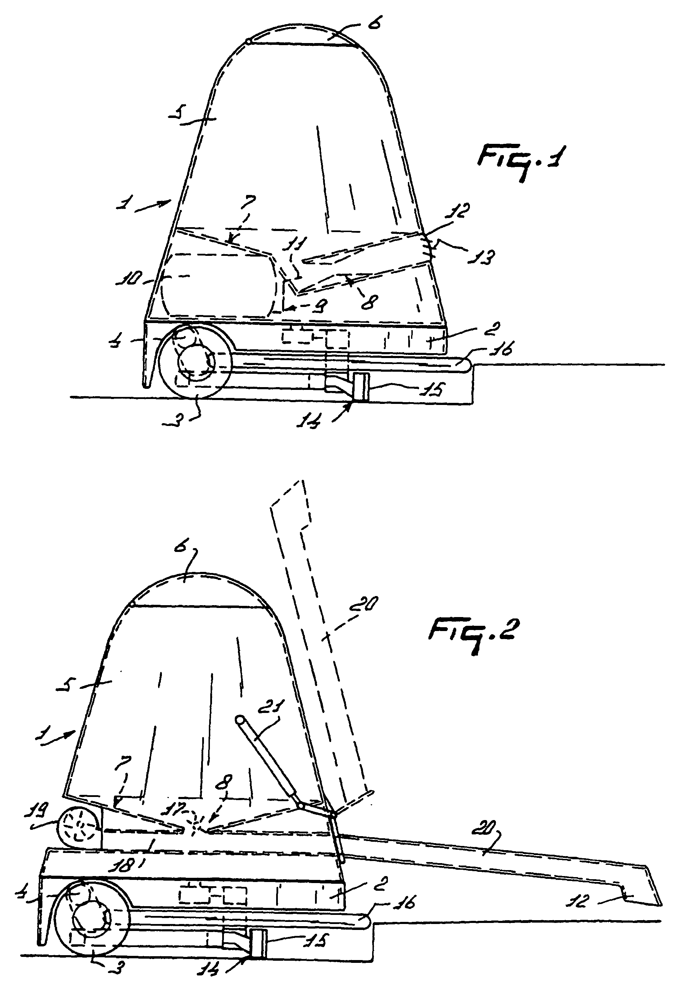

Figure 1 shows a first embodiment of an unmanned vehicle 1 comprising a frame 2 with two wheels 3 disposed underneath, which wheels 3 are each individually drivable by means of an electric motor 4. On the frame 2 there is arranged a hopper 5 with a cover 6. The hopper 5 is designed as a conical one. In the hopper 5, near the lower side thereof, there are disposed spreading means 7 with the aid of which material stored in the hopper 5, such as sawdust or straw, can be spread over the stable floor. The spreading means 7 comprise a metering unit 8 which, in the present embodiment, is designed as a venturi. The spreading means 7 further comprise a compressed air unit 9 which is provided with a compressed air vessel 10 with a pipe 11 connected thereto. A (non-shown) valve enables air to flow from the compressed air vessel via the pipe 11 to the metering unit 8. The material to be spread can leave the metering unit 8 via a distribution mouthpiece 12. The distribution mouthpiece 12 is provided with guide members 13 which are adjustable in such a manner that by means of these members the direction of the material to be spread is defined.

Apart from the fact that the unmanned vehicle 1 is supported by the wheels 3, a further support point is constituted by a manure displacing device 14. In the present embodiment, the manure displacing device 14 comprises e.g. a manure slide 15. The unmanned vehicle 1 is further provided with a rotatable guide/protective bracket 16.

Figure 2 shows a second embodiment of an unmanned vehicle 1, in which parts corresponding to those in the first embodiment are indicated by the same reference numerals. In the second embodiment of the invention the spreading means 7 comprise a metering unit 8 which is constituted by a cam wheel 17. The spreading means 7 further comprise a guide channel 18, to one end of which a ventilator 19 is connected. By means of the ventilator 19 it is possible to blow air into the guide channel 18. Via the cam wheel 17 material is brought from the hopper 5 into the guide channel 18. To the other end of the guide channel 18 there is connected an extension piece 20 whose end is provided with a distribution mouthpiece 12. The extension piece 20 can be pivoted upwards by means of a control cylinder 21, as shown in Figure 2.

Both in the first and second embodiment of the invention it is possible to rotate the spreading means 7 relative to the frame 2 with the aid of (non-shown) control means.

## Claims

1. An unmanned vehicle which is adapted to be used in a stable, such as a cowshed, said unmanned vehicle (1) being connected to a hopper and/or comprises a hopper (5) for the storage of material, such as e.g. sawdust or straw, and being provided with spreading means (7) for spreading the material, **characterized in that** the unmanned vehicle (1) is provided with detection means for determining the surface area which is covered with the material to be spread.

2. An unmanned vehicle as claimed in claim 1, **characterized in that** the unmanned vehicle is provided with navigation means for guiding the unmanned vehicle (1) through the stable.

3. An unmanned vehicle as claimed in claim 1 or 2, **characterized in that** the navigation means and/or detection means comprise a camera.

4. An unmanned vehicle as claimed in claim 1, 2 or 3, **characterized in that** the spreading means (7) comprise metering means (8) for metering the material to be spread.

5. An unmanned vehicle as claimed in any one of the preceding claims, **characterized in that** the spreading means (7) comprise a ventilator (19).

6. An unmanned vehicle as claimed in any one of the preceding claims, **characterized in that** the spreading means comprise a compressed air unit (9).

7. An unmanned vehicle as claimed in any one of the preceding claims, **characterized in that** the spreading means (7) comprise a distribution mouthpiece (12) for the distribution of the material to be spread.

8. An unmanned vehicle as claimed in any one of the preceding claims, **characterized in that** the spreading means (7) are rotatably disposed on the unmanned vehicle (1).

9. An unmanned vehicle as claimed in any one of the preceding claims, **characterized in that** the unmanned vehicle (1) comprises a manure displacing device (14), such as e.g. a manure slide (15).

## Patentansprüche

1. Unbemanntes Fahrzeug, das zur Verwendung in einem Stall, wie z. B. einem Kuhstall, geeignet ist, wobei das unbemannte Fahrzeug (1) mit einem Vorratsbehälter verbunden ist und/oder einen Vorratsbehälter (5) zur Aufnahme von Material, wie z. B. Sägemehl oder Stroh, umfaßt und mit einer Streuvorrichtung (7) zum Streuen des Materials versehen ist,
**dadurch gekennzeichnet, daß** das unbemannte Fahrzeug (1) mit einer Detektionsvorrichtung zur Ermittlung der Fläche versehen ist, die mit dem zu streuenden Material bedeckt wird.

2. Unbemanntes Fahrzeug nach Anspruch 1,
**dadurch gekennzeichnet, daß** das unbemannte Fahrzeug mit einer Navigationsvorrichtung zum Leiten des unbemannten Fahrzeuges (1) durch den Stall versehen ist.

3. Unbemanntes Fahrzeug nach Anspruch 1 oder 2,
**dadurch gekennzeichnet, daß** die Navigationsvorrichtung und/oder die Detektionsvorrichtung eine Kamera umfassen.

4. Unbemanntes Fahrzeug nach Anspruch 1, 2 oder 3,
**dadurch gekennzeichnet, daß** die Streuvorrichtung (7) eine Dosiervorrichtung (8) zum Dosieren des zu streuenden Materials umfaßt.

5. Unbemanntes Fahrzeug nach einem der vorhergehenden Ansprüche,
**dadurch gekennzeichnet, daß** die Streuvorrichtung (7) ein Gebläse (19) umfaßt.

6. Unbemanntes Fahrzeug nach einem der vorhergehenden Ansprüche,
**dadurch gekennzeichnet, daß** die Streuvorrichtung eine Drucklufteinheit (9) umfaßt.

7. Unbemanntes Fahrzeug nach einem der vorhergehenden Ansprüche,
**dadurch gekennzeichnet, daß** die Streuvorrichtung (7) ein Verteilermundstück (12) zur Verteilung des zu streuenden Materials umfaßt.

8. Unbemanntes Fahrzeug nach einem der vorhergehenden Ansprüche,
**dadurch gekennzeichnet, daß** die Streuvorrichtung (7) drehbar an dem unbemannten Fahrzeug (1) angeordnet ist.

9. Unbemanntes Fahrzeug nach einem der vorhergehenden Ansprüche,
**dadurch gekennzeichnet, daß** das unbemannte Fahrzeug (1) eine Mistverlagerungsvorrichtung (14), wie z. B. einen Mistschieber (15), umfaßt.

## Revendications

1. Véhicule téléguidé adapté pour être utilisé dans une étable, telle qu'une étable pour les vaches, ledit véhicule téléguidé (1) étant relié à une trémie et / ou comprenant une trémie (5) pour le stockage de matériaux, tels que par exemple de la sciure ou de la paille, et étant muni de moyens d'épandage (7) pour épandre le matériau, **caractérisé en ce que** le véhicule téléguidé (1) est muni de moyens de détection pour déterminer la superficie qui est couverte avec le matériau à épandre.

2. Véhicule téléguidé selon la revendication 1, **caractérisé en ce que** le véhicule téléguidé est muni de moyens de navigation pour guider le véhicule téléguidé (1) à travers l'étable.

3. Véhicule téléguidé selon la revendication 1 ou 2, **caractérisé en ce que** le moyen de navigation et / ou le moyen de détection comprend un caméra.

4. Véhicule téléguidé selon la revendication 1, 2 ou 3, **caractérisé en ce que** les moyens d'épandage (7) comprennent un moyen de mesurage (8) pour mesurer le matériau à épandre.

5. Véhicule téléguidé selon l'une quelconque des revendications précédentes, **caractérisé en ce que** les moyens d'épandage (7) comprennent un ventilateur (19).

6. Véhicule téléguidé selon l'une quelconque des revendications précédentes, **caractérisé en ce que** les moyens d'épandage comprennent une unité d'air comprimé (9).

7. Véhicule téléguidé selon l'une quelconque des revendications précédentes, **caractérisé en ce que** les moyens d'épandage (7) comprennent un embout de distribution (12) pour la distribution du matériau à épandre.

8. Véhicule téléguidé selon l'une quelconque des revendications précédentes, **caractérisé en ce que** les moyens d'épandage (7) sont placés de manière rotative sur le véhicule téléguidé (1).

9. Véhicule téléguidé selon l'une quelconque des revendications précédentes, **caractérisé en ce que** véhicule téléguidé (1) comprend un dispositif de déplacement du fumier (14), tel que par exemple une glissière pour le fumier (15).
